# EUROPÄISCHE PATENTSCHRIFT

(11) **EP 1 560 740 B1**
(45) Veröffentlichungstag und Bekanntmachung des Hinweises auf die Patenterteilung: **19.09.2007**
(21) Anmeldenummer: 03776637.5
(22) Anmeldetag: 11.11.2003
(51) Int. Cl.: B61F 5/32, F16F 3/10

(54) **FEDERSÄULE FÜR EINE RADSATZFÜHRUNG EINES SCHIENENFAHRZEUGS**
SPRING COLUMN FOR GUIDING THE AXLES OF A RAIL-BORN VEHICLE
COLONNE DE RESSORTS POUR UN GUIDAGE D'ESSIEUX D'UN VEHICULE SUR RAILS

(30) Priorität: 11.11.2002 AT 16972002
(43) Veröffentlichungstag der Anmeldung: 10.08.2005
(73) Patentinhaber: Siemens Transportation Systems GmbH & Co. KG, 1110 Wien (AT)
(72) Erfinder: RINGSWIRTH, Jochen, A-8680 Mürzzuschlag (AT); ISOPP, Gottfried, A-8020 Graz (AT)
(74) Vertreter: Patentanwaltskanzlei Matschnig
(86) Internationale Anmeldenummer: PCT/AT2003/000339
(87) Internationale Veröffentlichungsnummer: WO 2004/043760

(56) Entgegenhaltungen:
- EP-A- 0 421 864
- EP-A- 0 624 505
- CH-A- 434 344

## Beschreibung

Die Erfindung betrifft eine Radsatzführung eines Schienenfahrzeugs.

Weiters betrifft die Erfindung ein Schienenfahrzeug mit einem Drehgestell und daran angeordneten Radsatzführungen, welche jeweils zumindest zwei mit einem Lagergehäuse eines Radsatzes verbundene Schraubenfedern aufweisen, wobei die Schraubenfedern an einander gegenüberliegenden Seiten eines Achslagers des Radsatzes angeordnet sind, der Federweg der Schraubenfeder im wesentlichen normal zur Schienenebene verläuft, und jeder Schraubenfeder zumindest ein über oder unter der Schraubenfeder angeordnetes Federelement aus einem elastomeren Werkstoff zugeordnet ist.

Aus der CH 434 344 A ist eine Federsäule für eine Radsatzführung eines Schienenfahrzeuges bekannt geworden. Die bekannte Federsäule weist eine Schraubenfeder und ein Federelement aus einem elastomeren Werkstoff auf. Das Federelement aus elastomeren Werkstoff und die Schraubenfeder sind in einem in ein Schienenfahrzeug eingebauten Zustand übereinander liegend angeordnet, wobei die Federsäule in einem noch nicht eingebauten Zustand eine bauliche Einheit bildet.

Ein Schienenfahrzeug und eine Radsatzführung der eingangs genannten Art sind beispielsweise aus der EP 0 624 505 A1 bekannt geworden. Das bekannte Schienenfahrzeug weist ein Drehgestell mit Radsatzführungen auf, welche jeweils aus einzeln oder paarweise an einem Lagergehäuse eines Radsatzes angeordneten Schraubenfedern und den Schraubenfedern zugeordneten Gummielementen bestehen. Die Schraubenfedern wirken hierbei mit den ihnen zugeordneten Gummielementen zusammen, wobei die Führung des Radsatzes durch die Flexicoilwirkung der Schraubenfedern und die Radialsteifigkeit des Gummielements gemeinsam erfolgt.

Nachteilig an der bekannten Ausführungsform ist vor allem, dass während des Betriebs Rotationsmomente auftreten können, welche sich störend auf die Laufruhe des Drehgestells auswirken können. Ein weiterer Nachteil der bekannten Lösung besteht darin, dass sich der Einbau relativ aufwendig gestaltet, da die Gummielemente während des Einbaus in Hohlräume der Radsatzlager eingepresst werden müssen.

Es ist daher eine Aufgabe der Erfindung, die oben genannten Nachteile des Stands der Technik zu überwinden.

Diese Aufgabe wird mit einer Radsatzführung der eingangs genannten Art erfindungsgemäß dadurch gelöst, dass sie zumindest zwei, bezüglich eines Punktes der Radsatzachse zueinander punktsymmetrisch angeordnete Federsäulen aufweist, wobei jede der Federsäule zumindest eine Schraubenfeder und zumindest ein Federelement aus einem elastomeren Werkstoff aufweist, und das zumindest eine Federelement sowie die zumindest eine Schraubenfeder in einem, in ein Schienenfahrzeug eingebautem Zustand übereinander liegend angeordnet sind, das Federelement aus elastomeren Werkstoff mit einem innerhalb der Schraubenfeder angeordneten Führungszapfen verbunden ist, und zwischen dem Federelement und der Schraubenfeder ein von dem Führungszapfen durchragter Federteller vorgesehen ist, welcher entlang eines Abschnitts des Führungszapfens verschiebbar ist, und die Bewegung des Federtellers in Richtung des Federelementes durch einen Anschlag begrenzt ist, wobei der Anschlag mit dem Federteller derart zusammenwirkt, dass die Expansion der Schraubenfeder begrenzt ist, wobei die Schraubenfeder an ihren längsseitigen Enden von dem Federteller und zumindest einen nach außen ragenden Halteabschnitt des Führungszapfens gehalten ist, sodass die Federsäule in einem noch nicht in ein Schienenfahrzeug eingebauten Zustand eine bauliche Einheit bildet. Das Federelement aus elastomeren Werkstoff und die Schraubenfeder bilden eine bauliche Einheit, diese Einheit wird im Folgenden als Federsäule bezeichnet. Die erfindungsgemäße Ausgestaltung erlaubt eine einfache Montage der Federsäule mittels Verschraubung am Radsatzlager und am Drehgestellrahmen, sodass ein von der Schraubenfeder getrennter Einbau des Federelements nicht erforderlich ist.

Bei dem erfindungsgemäßen Schienenfahrzeug bzw. der erfindungsgemäßen Radsatzführung wird aufgrund einer punktsymmetrischen Anordnung, der einer Radsatzführung zugeordneten Federsäulen, ein momentfreier Kräfteverlauf in der Radsatzführung ermöglicht. Die Radsatzführung besteht aus zwei, durch die Radsatzachse, punksymmetrisch angeordnete Federsäulen. Somit treten im Bereich der Radsatzführung nur Translationsbewegungen auf. Auftretende Traktionskräfte oder Bremskräfte die zwischen Drehgestellrahmen und Radsatz mittels dieser Radsatzführung übertragen werden, verursachen aufgrund der ausgeführten Konstruktion kein Drehmoment auf das Radsatzlager. Die erfindungsgemäße Ausführung dieser Radsatzführung ergibt eine Eliminierung von Drehmomenten normal zur Fahrtrichtung im Bereich der Radsätze und verhindert ein mögliches Verkippen der Primärfederstufe bzw. das Radsatzlagergehäuses um eine Achse normal zur Fahrtrichtung, wodurch sich die Kraftwirkungen wesentlich verbessern.

Günstigerweise weist das Federelement ein mit dem Federteller verbundenes Gehäuse auf, wobei im Bereich eines dem Federteller zugewandten Endes des Gehäuses ein nach außen ragender Flansch zur Befestigung der Federsäule an dem Schienenfahrzeug vorgesehen ist.

Ein weiterer Vorteil der erfindungsgemäßen Lösung besteht darin, dass auch schon vor dem Einbau der Federsäule deren Steifigkeit gemessen werden kann. Aufgrund der Steifigkeitsmessungen kann die Anzahl der Beilagen, die für diese Federsäule benötigt wird, festgestellt werden. Dies ist deshalb von sehr großer praktischer Bedeutung, da auf diese Weise die Federsäulen so in das Schienenfahrzeug eingebaut werden können, dass auf jeder Achsseite die gleiche Achslast wirkt. In einer vorteilhaften Variante der Erfindung kann dies durch Zugabe von Beilagen, die an dem Flansch angeordnet sind, bewirkt werden, da üblicherweise aufgrund von bauartbedingten Toleranzen nicht jede Federsäule die gleiche Steifigkeit aufweist.

In einer bevorzugten Ausführungsform der Erfindung weist der Führungszapfen einen im wesentlichen kegelstumpfförmigen Abschnitt auf, der in einen im wesentlichen zylinderförmiger Abschnitt übergeht, sodass der Führungszapfen im wesentlichen Y-förmigen Querschnitt aufweist. Der Halteabschnitt kann an der Basis des kegelstumpfförmigen Abschnittes nach radial außen ragender Rand ausgeführt sein. Weiters kann das Federelement aus elastomeren Werkstoff mit dem zylinderförmigen Abschnitt des Führungszapfens verbunden sein.

Darüber hinaus kann das Federelement einen Innenteil aufweist, dessen dem Federteller zugewandter Endbereich einen radial nach außen ragenden Rand aufweist, wobei durch den Federteller und den Rand ein Anschlag für den Federweg der Schraubenfeder gebildet ist. der Innenteil kann aus Metall, beispielsweise aus Stahl gefertigt sein, und mit der Führungsfeder durch Verkleben und/oder Vulkanisieren verbunden sein.

Der Führungszapfen der Schraubenfeder und der Innenteil des Federelements können um eine zu ihren Längsmittelachsen parallele Achse drehfest miteinander verbunden, beispielsweise verschraubt, sein.

Weitere Vorteile lassen sich dadurch erzielen, dass das Federelement aus elastomeren Werkstoff eine Gummi-Metallfeder Schichtfeder und die Schraubenfeder aus Stahl ist.

Die oben genannten Aufgaben lassen sich auch mit einem Schienenfahrzeug der eingangs genannten Art erfindungsgemäß dadurch lösen, dass das einer ersten, dem Achslager zugeordneten Schraubenfeder zugehörige Federelement über dieser ersten Schraubenfeder angeordnet ist, und das einer zweiten, auf einer der ersten Schraubenfeder gegenüberliegenden Seite des Achslagers angeordneten zweiten Schraubenfeder zugehörige Federelement unter der zweiten Schraubenfeder angeordnet ist.

Vorteilhafterweise sind die Radsatzführungen des Schienenfahrzeuges gemäß einem der Ansprüche 2 bis 11 ausgebildet.

Die Erfindung samt weiterer Vorteile wird im Folgenden anhand einiger nicht einschränkender Ausführungsbeispiele, welche in der Zeichnung dargestellt sind, näher erläutert. In dieser zeigen schematisch:
- Fig. 1: eine seitliche Teilansicht eines erfindungsgemäßen Schienenfahrzeuges;
- Fig. 2: eine perspektivische Ansicht einer Federsäule;
- Fig. 3: eine Seitenansicht der Federsäule aus Fig. 2 und
- Fig. 4: einen Schnitt entlang der Linie A-A in Fig. 3.

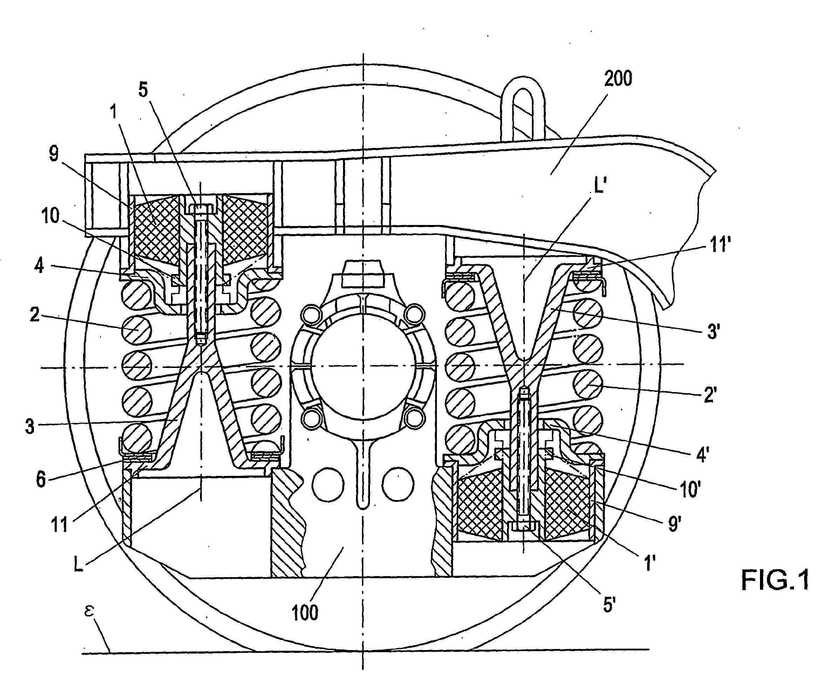

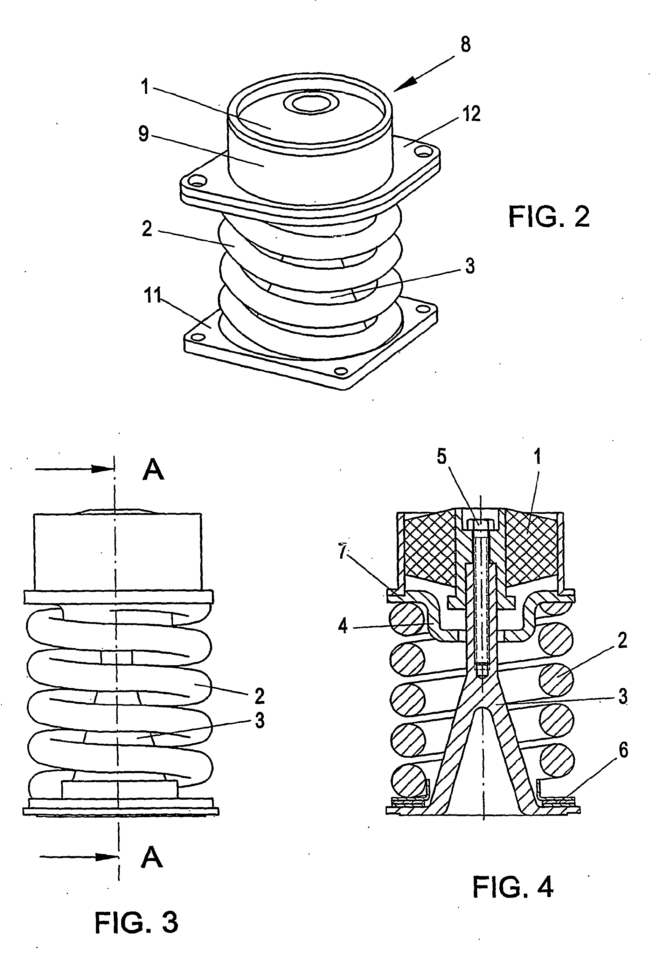

Gemäß Fig. 1 weist eine erfindungsgemäße Radsatzführung bzw. ein erfindungsgemäßes Schienenfahrzeug je mindestens zwei Federsäulen auf, welche als Primärfederung des Schienenfahrzeugs dienen. Die Federsäulen (Fig. 2-4) sind an einander gegenüberliegenden Seiten eines Achslagers 100 einer Radsatzseite angeordnet.

Die Schraubenfedern 2, 2 ' sind dabei so angeordnet, dass ihre jeweiligen Längsmittelachsen L, L' im wesentlichen normal zur Schienenebene ε verläuft.

Eine Schraubenfeder 2, 2', ein im Inneren der Schraubenfeder 2, 2' verlaufender Führungszapfen 3, 3', ein Federteller 4, 4', eine Verschraubung 5, 5', eine Schallentkoppelung 6 Beilagen 7 sowie die zugeordneten Federelemente 1, 1' aus elastomeren Werkstoff bilden gemäß in den Fig. 2-4 dargestellten Ausführungsform der Erfindung jeweils eine Federsäule bzw. ein Primärfederelement.

Im Folgenden wird das Federelement 1, 1' aus elastomeren Werkstoff der einfacheren Schreibweise wegen als Führungsfeder 1, 1' bezeichnet.

In einem in ein Schienenfahrzeug eingebauten Zustand sind die Schraubenfeder 2, 2' und die ihr zugeordnete Führungsfeder 1, 1' im wesentlichen konzentrisch zueinander und übereinander liegend angeordnet.

Zwischen der Führungsfeder 1, 1' und der zugeordneten Schraubenfeder 2, 2' ist der von dem Führungszapfen 3, 3' durchragte Federteller 4, 4' vorgesehen, wobei der Federteller 4, 4' entlang eines Abschnitts des Führungszapfens 1, 1' verschiebbar ist. Die Bewegung des Federtellers 4, 4' in Richtung der Führungsfeder 1, 1' ist durch einen Anschlag 10, 10' begrenzt. Weiters ist die Schraubenfeder 2, 2' von dem Federteller 4, 4' und zumindest einen nach außen ragenden Halteabschnitt 11,11' des Führungszapfens 3, 3' gehalten.

Der Führungszapfen 3, 3' kann einen im wesentlichen kegelstumpfförmigen Abschnitt aufweisen, der in einen zylinderförmiger Abschnitt übergeht, sodass der Führungszapfen 3, 3' einen im wesentlichen Y-förmigen Querschnitt aufweist. Der Halteabschnitt 11, 11' für die Schraubenfeder 2, 2' kann an der Basis des kegelstumpfförmigen Abschnittes als nach radial außen ragender Rand ausgeführt sein, auf welchem die Schraubenfeder 2, 2' aufliegt. Durch die soeben erwähnte Formgebung des Führungszapfens 3, 3' lässt sich eine gute und stabile Positionierung der Schraubenfeder 2, 2' gewährleisten. Weiters kann zwischen der Schraubenfeder 2, 2' und dem Halteabschnitt eine Schallentkopplung 6 vorgesehen sein. Sowohl der Führungszapfen 3, 3' als auch der Federteller 4, 4' können aus Metall, beispielsweise aus Stahl gefertigt sein.

Die Führungsfeder 1, 1' kann ihrerseits mit dem zylinderförmigen Abschnitt des Führungszapfens 3, 3' verbunden sein.

Weiters kann die Führungsfeder 1,1' ein mit dem Federteller 4, 4' verbundenes Gehäuse 9, 9' aufweisen, wobei im Bereich eines dem Federteller 4, 4' zugewandten Endes des Gehäuses 9, 9' ein nach außen ragender, in Fig. 2 dargestellter, Flansch 12 zur Befestigung der Federsäule 8 an dem Schienenfahrzeug vorgesehen ist. Der Flansch 12 kann beispielsweise auch einstückig mit dem Federteller 4, 4' oder dem Gehäuse 9 aber auch als eigenständiger Bauteil ausgebildet sein.

Die Führungsfeder 1, 1' kann bei Zusammenbau in das Gehäuse 9 gezwängt werden und durch die zwischen der Gehäuseinnenseite und der Führungsfeder 1, 1' wirkende Reibungskraft Bewegungen des Schienenfahrzeuges folgen. Die Führungsfeder 1, 1' kann aber auch mit dem Gehäuse mittels Verkleben und/oder Vulkanisieren verbunden sein.

Die laterale Führungssteifigkeit der Federsäule 8 bzw. des Primärfederelements wird in einer Ebene parallel zur Schienenebene ε von der Radialsteifigkeit des Führungsfeder 1, 1' aus elastomeren Werkstoff, z. B. einer Gummi-Metallfeder-Schichtfeder, und von der Quersteifigkeit der Schraubenfeder 2, 2' bestimmt. Die Quersteifigkeit der Federsäule 8 wird hierbei wesentlich von der Radialsteifigkeit der Führungsfeder 1, 1' in einer Ebene parallel zur Schienenebene ε beeinflusst. Die Steifigkeit der Federsäule 8 in vertikaler Richtung hängt von der Schraubenfeder 2, 2' und der Axialsteifigkeit der Führungsfeder 1, 1' ab, wobei hier die Steifigkeit in vertikaler Richtung wesentlich von der Schraubenfeder 2, 2' bzw. Stahlfeder beeinflusst wird.

Die Führungsfeder 1, 1' wird mit dem bereits oben erwähnten Führungszapfen 3,3' der entweder an dem Radsatzlagergehäuse 100 oder an dem Drehgestellrahmen 200 befestigt sein kann, angesteuert.

Durch die Anordnung der Gummi-Metallfeder über oder unter der Schraubenfeder 2, 2', steht der Gummi-Metall Führungsfeder mehr Bauraum zur Verfügung, der vorhanden sein muss, um große Axialwege realisieren zu können.

Gemäß Fig. 2 und 3 bilden je eine Schraubenfeder 2, 2' und das ihr zugeordnete Führungsfeder aus elastomeren Werkstoff erfindungsgemäß eine bauliche Einheit. Dies wird durch eine Durchtrittsöffnung im Federteller 4, 4', durch welche der Führungszapfen 3, 3' verläuft, ermöglicht. Der Führungszapfen 3, 3' wird in der hier dargestellten Ausführungsform mit der Führungsfeder 1, 1' mittels einer Schraube 5, 5' verbunden. Die Führungsfeder 1, 1' kann an der Verbindungsstelle mit dem Führungszapfen 3, 3' einen Anschlag 10, 10', beispielsweise einen Flansch, aufweisen der bei voller Ausfederung an dem Federteller 4 ,4' aufliegt und somit die Federsäule 8 zusammenhält.

Ein mit dem Führungszapfen 3, 3' drehfest verbundener Innenteil 13 der Führungsfeder 1, 1' kann hierbei, wie in Fig. 4 dargestellt, an seinem dem Federteller zugewandten Endbereich den Flansch bzw. einen sich nach außen erstreckenden Rand aufweisen, welcher in Zusammenwirken mit dem Federteller 4, 4' den Anschlag 10, 10' für den Federweg der Schraubenfeder 2, 2' und der Führungsfeder 1, 1' bildet.

Die Federsäule 8 wird vormontiert, d. h. eine Federsäule 8 bzw. ein Primärfederungselement wird schon vor dem Einbau in das Schienenfahrzeug zu einer baulichen Einheit zusammengestellt. Zum einen ermöglicht dies eine wesentliche Vereinfachung des Einbauvorgangs der Federsäule, bzw. des Primärfederungselementes, in das Schienenfahrzeug, zum anderen wird dadurch, wie bereits eingangs erwähnt, eine Überprüfung der Eigenschaften der Federsäule bzw. des Primärfederungselementes und somit ein optimaler Einbau ermöglicht. Um bauartbedingte Toleranzen auszugleichen, können an dem zwischen dem Flansch des Gehäuses Beilagen 7 vorgesehen sein.

Eine erfindungsgemäße Radsatzführung weist zumindest zwei Federsäulen 8 der soeben beschrieben Art auf, die punktsymmetrisch durch die Radsatzachse zueinander angeordnet sind. Die Schraubenfedern 2, 2', die Führungszapfen 3, 3', der Federteller 4, 4', die Verschraubung 5, 5', die, die Beilagen 7 und die zugeordneten Führungsfedern 1, 1' können, wie bereits oben erwähnt, jeweils eine Federsäule 8 bzw. ein Primärfederelement bilden.

Erfindungsgemäß ist die elastomere Führungsfeder 1, 1' bei der erfindungsgemäßen Radsatzführung, einmal über und einmal unter der Schraubenfeder 2, 2' angeordnet. D. h. die beiden einem Achslager 100 zugeordneten Federsäulen bzw. Primärfederungselemente werden um 180° zueinander verdreht eingebaut, dies entspricht einer, durch die Radsatzachse verlaufenden, punksymmetrischen Anordnung. Die Federsäulen bzw. Primärfederungselemente werden an dem Radsatzlagergehäuse bzw. an dem Drehgestellrahmen, beispielsweise mittels Schrauben, verbunden.

Eine Primärfederstufe des Schienenfahrzeuges besteht somit aus zwei Federsäulen bzw. Primärfederungselementen pro Rad, wobei die Federsäulen bzw. Primärfederungselementen punktsymmetrisch zueinander angeordnet sind. D. h. die Führungsfeder 1, 1' ist einmal unter und einmal über der Stahlfeder 2, 2' angeordnet.

Die erfindungsgemäße Anordnung ermöglicht einen momentenfreien Kräfteverlauf, d. h. es treten nur Translationsbewegungen auf. Dadurch kann ein Verkippen der Primärfederstufe bzw. der Federsäule um eine im wesentlichen in einer zur Schienenebene parallelen Ebene normal zur Fahrtrichtung verlaufenden Achse verhindert werden.

## Patentansprüche

1. Radsatzführung eines Schienenfahrzeugs, **dadurch gekennzeichnet, dass** sie zumindest zwei, bezüglich eines Punktes der Radsatzachse zueinander punktsymmetrisch angeordnete Federsäulen aufweist, wobei jede der Federsäule zumindest eine Schraubenfeder (2, 2') und zumindest ein Federelement (1, 1') aus einem elastomeren Werkstoff aufweist, und das zumindest eine Federelement (1, 1') sowie die zumindest eine Schraubenfeder (2, 2') in einem, in ein Schienenfahrzeug eingebautem Zustand übereinander liegend angeordnet sind, das Federelement (1, 1') aus elastomeren Werkstoff mit einem innerhalb der Schraubenfeder (2, 2') angeordneten Führungszapfen (3, 3') verbunden ist, und zwischen dem Federelement (1, 1') und der Schraubenfeder (2, 2') ein von dem Führungszapfen (3,3') durchragter Federteller (4, 4') vorgesehen ist, welcher entlang eines Abschnitts des Führungszapfens (3, 3') verschiebbar ist, und die Bewegung des Federtellers (4,4') in Richtung des Federelementes (1,1') durch einen Anschlag (10,10') begrenzt ist, wobei der Anschlag (10, 10') mit dem Federteller derart zusammenwirkt, dass die Expansion der Schraubenfeder (2, 2') begrenzt ist, wobei die Schraubenfeder (2, 2') an ihren längsseitigen Enden von dem Federteller (4, 4') und zumindest einen nach außen ragenden Halteabschnitt (11, 11') des Führungszapfens (3, 3') gehalten ist, sodass die Federsäule in einem noch nicht in ein Schienenfahrzeug eingebauten Zustand eine bauliche Einheit bildet.

2. Radsatzführung nach Anspruch 1, **dadurch gekennzeichnet, dass** das Federelement (1, 1') ein mit dem Federteller (4, 4') verbundenes Gehäuse (9, 9') aufweist, wobei im Bereich eines dem Federteller (4, 4') zugewandten Endes des Gehäuses (9, 9') ein nach außen ragender Flansch (12) zur Befestigung der Federsäule an dem Schienenfahrzeug vorgesehen ist.

3. Radsatzführung nach Anspruch 2, **dadurch gekennzeichnet, dass** an dem Flansch (12) Beilagen (7) zum Ausgleich von Toleranzen vorgesehen sind.

4. Radsatzführung nach Anspruch 1 oder 2, **dadurch gekennzeichnet, dass** der Führungszapfen (3, 3') einen im wesentlichen kegelstumpfförmigen Abschnitt aufweist, der in einen im wesentlichen zylinderförmigen Abschnitt übergeht, sodass der Führungszapfen (3, 3') im wesentlichen Y-förmigen Querschnitt aufweist.

5. Radsatzführung nach Anspruch 4, **dadurch gekennzeichnet, dass** der Halteabschnitt (11, 11') an der Basis des kegelstumpfförmigen Abschnittes als nach radial außen ragender Rand ausgeführt ist.

6. Radsatzführung nach Anspruch 4 oder 5, **dadurch gekennzeichnet, dass** das Federelement (1, 1') aus elastomeren Werkstoff mit dem zylinderförmigen Abschnitt des Führungszapfens (3, 3') verbunden ist.

7. Radsatzführung nach einem der Ansprüche 1 bis 6, **dadurch gekennzeichnet, dass** das Federelement (1, 1') einen Innenteil (13) aufweist, dessen dem Federteller (4, 4') zugewandter Endbereich einen radial nach außen ragenden Rand aufweist, wobei durch den Federteller (4, 4') und den Rand der Anschlag (10, 10') für den Federweg der Schraubenfeder (2, 2') gebildet ist.

8. Radsatzführung nach Anspruch 7, **dadurch gekennzeichnet, dass** der Führungszapfen (3, 3') der Schraubenfeder und der Innenteil des Federelements (1, 1') um eine zu ihren Längsmittelachsen parallele Achse (L, L') drehfest miteinander verbunden sind.

9. Radsatzführung nach einem der Ansprüche 1 bis 8, **dadurch gekennzeichnet, dass** der Führungszapfen (3, 3') der Schraubenfeder (2, 2') und das Federelement (1, 1') aus elastomeren Werkstoff miteinander verschraubt sind.

10. Radsatzführung nach einem der Ansprüche 1 bis 9, **dadurch gekennzeichnet, dass** das Federelement (1, 1') aus elastomeren Werkstoff eine Gummi-Metallfeder ist.

11. Radsatzführung nach einem der Ansprüche 1 bis 10, **dadurch gekennzeichnet, dass** die Schraubenfeder (2, 2') aus Stahl ist.

12. Schienenfahrzeug mit einem Drehgestell (200) und daran angeordneten Radsatzführungen, welche je zumindest zwei mit einem Lagergehäuse eines Radsatzes verbundene Schraubenfedern aufweisen, wobei die Schraubenfedern (2, 2') an einander gegenüberliegenden Seiten eines Achslagers (100) des Radsatzes angeordnet sind, der Federweg der Schraubenfedern (2, 2') im wesentlichen normal zur Schienenebene (ε) verläuft, und jeder Schraubenfeder (2, 2') zumindest ein über oder unter der Schraubenfeder angeordnetes Federelement (1, 1') aus einem elastomeren Werkstoff zugeordnet ist, **dadurch gekennzeichnet, dass** das einer ersten, dem Achslager zugeordneten Schraubenfeder (2) zugehörige Federelement (1) über dieser ersten Schraubenfeder (2) angeordnet ist, und das einer zweiten, auf einer der ersten Schraubenfeder (2) gegenüberliegenden Seite des Achslagers angeordneten zweiten Schraubenfeder (2') zugehörige Federelement (1') unter der zweiten Schraubenfeder (2') angeordnet ist.

13. Schienenfahrzeug nach Anspruch 12, **dadurch gekennzeichnet, dass** die Radsatzführungen je als Radsatzführung nach einem der Ansprüche 1 bis 11 ausgebildet sind.

## Claims

1. Wheel set mounting of a rail vehicle, **characterised in that** it features at least two spring columns arranged point symmetrically to each other relative to one point of the wheel set axel, such that each of the spring columns features at least one coil spring (2, 2') and at least one spring element (1, 1') made of elastomeric material; and that at least one spring element (1, 1') as well as the minimum one coil spring (2, 2') are arranged lying atop each other in a state of being built into the rail vehicle; that the spring element (1,1') made of elastomeric material is connected to a guiding pin (3, 3') inside the coil spring (2, 2'); and that between the spring element (1, 1') and the coil spring (2, 2') a spring plate (4, 4') penetrated by the guiding pin (3, 3') is provided, which can be moved along a segment of the guiding pin; and that the movement of the spring plate (4, 4') in the direction of the spring element (1, 1') is limited by an arrester (10, 10'), whereby the coil spring (2, 2') is held on its long ends by the spring plate (4, 4') and at least one stop section (11, 11') of the guiding pin (3, 3') protruding outwards, such that the spring column forms a structural unity while not yet in the state of being built into the rail vehicle.

2. Wheel set mounting according to claim 1, **characterised in that** the spring element (1, 1') features a housing (9, 9') connected to the spring plate (4, 4'), whereby a flange (12) extending outwards is provided for affixing the spring column to the rail vehicle in the area of an end of the housing (9, 9') facing the spring plate (4, 4')

3. Wheel set mounting according to claim 2, **characterised in that** attachments (7) for balancing tolerances are provided on the flange (12).

4. Wheel set mounting according to claim 1 or 2, **characterised in that** the guiding pin (3, 3') features a basically truncated cone shape, which runs into a basically cylindrical segment, such that the guiding pin (3, 3') features a basically Y-shaped cross section.

5. Wheel set mounting according to claim 4, **characterised in that** the stop section (11, 11') is designed as a frame extending radially outwards on the basis of the truncated cone-shaped segment.

6. Wheel set mounting according to claim 4 or 5, **characterised in that** the spring element (1, 1') made of elastomeric material is connected to the cylindrical segment of the guiding pin (3, 3').

7. Wheel set mounting according to one of the claims 1 to 6, **characterised in that** the spring element (1, 1') features an inner part (13), the end area of which facing the spring plate (4, 4') features a frame extending radially outwards, whereby the arrester (10, 10') for the travel of the coil spring (2, 2') is formed by the spring plate (4, 4') and the frame.

8. Wheel set mounting according to claim 7, **characterised in that** the guiding pin (3, 3') of the coil spring and the inner part of the spring element (1,1') are connected to each other torque-proof on an axis parallel to their longitudinal axle (L, L').

9. Wheel set mounting according to one of the claims 1 to 8, **characterised in that** the guiding pin (3, 3') of the coil spring (2, 2') and the spring element (1, 1') made of elastomeric material are screwed together.

10. Wheel set mounting according to one of the claims 1 to 10, **characterised in that** the spring element (1, 1') made of elastomeric material is a metal-rubber spring.

11. Wheel set mounting according to one of the claims 1 to 10, **characterised in that** the coil spring (2, 2') is made of steel.

12. Rail vehicle with a bogie (200) and wheel set mountings allocated to it, which each feature at least two coil springs connected to a bearing housing, such that the coil springs (2, 2') are arranged on sides of the wheel set's axel bearing (100) lying opposite to each other, that the travel of the coil springs (2, 2') runs basically normal to the rail level (ε), and that to every coil spring (2, 2') is allocated at least one spring element (1, 1') made of elastomeric material located over or under the coil spring, **characterised in that** a first spring element (1) belonging to the coil spring (2) located on the axel bearing is arranged over this first coil spring (2), and that a second spring element (1'), located on one of the sides of the axel bearing lying opposite to the first coil spring (2), belonging to the second coil spring (2'), is arranged under the second coil spring (2').

13. Rail vehicle according to claim 12, **characterised in that** the wheel set mountings are each constructed as a wheel set mounting according to one of the claims 1 to 11.

## Revendications

1. Guidage de train de roues d'un véhicule ferroviaire, **caractérisé en ce qu'**il présente au moins deux colonnes élastiques disposées symétriquement l'une de l'autre par rapport à un point de l'essieu du train de roues, chacune des colonnes élastiques présentant au moins un ressort hélicoïdal (2, 2') et un au moins un élément élastique (1, 1') en matière élastomère, et l'au moins un élément élastique (1, 1') ainsi que l'au moins un ressort hélicoïdal (2, 2') sont disposés l'un au-dessus de l'autre dans l'état monté dans un véhicule ferroviaire, l'élément élastique (1, 1') en matière élastomère est relié à un téton de guidage (3, 3') disposé à l'intérieur du ressort hélicoïdal (2, 2') et un plateau de ressort (4, 4') traversé par le téton de guidage (3, 3') est prévu entre l'élément élastique (1, 1') et le ressort hélicoïdal (2, 2'), lequel plateau est mobile en translation le long d'un segment du téton de guidage (3, 3') et le mouvement du plateau de ressort (4, 4') dans la direction de l'élément élastique (1, 1') est limité par une butée (10, 10'), la butée (10, 10') coopérant avec le plateau de ressort de telle manière que l'expansion du ressort hélicoïdal (2, 2') soit limitée, le ressort hélicoïdal (2, 2') étant tenu à ses extrémités longitudinales par le plateau de ressort (4, 4') et par au moins un segment de retenue (11, 11') du téton de guidage (3, 3') qui fait saillie vers l'extérieur, de sorte qu'à l'état non encore monté dans un véhicule ferroviaire, la colonne élastique forme une unité de construction.

2. Guidage de train de roues selon la revendication 1, **caractérisé en ce que** l'élément élastique (1, 1') présente un boîtier (9, 9') assemblé au plateau de ressort (4, 4'), cependant que, dans la région d'une extrémité du boîtier (9, 9') dirigée vers le plateau de ressort (4, 4') est prévue une bride (12) en saillie vers l'extérieur, destinée à la fixation de la colonne élastique au véhicule ferroviaire.

3. Guidage de train de roues selon la revendication 2, **caractérisé en ce que** des cales (7) sont prévues contre la bride (12) pour la compensation des tolérances.

4. Guidage de train de roues selon la revendication 1 ou 2, **caractérisé en ce que** le téton de guidage (3, 3') présente un segment sensiblement tronconique qui se termine dans un segment sensiblement cylindrique, de sorte que le téton de guidage (3, 3') présente une section sensiblement en forme de Y.

5. Guidage de train de roues selon la revendication 4, **caractérisé en ce que** le segment de retenue (11, 11') à la base du segment tronconique est réalisé sous la forme d'un rebord en saillie radiale vers l'extérieur.

6. Guidage de train de roues selon la revendication 4 ou 5, **caractérisé en ce que** l'élément élastique (1, 1') en matière élastomère est assemblé au segment cylindrique du téton de guidage (3, 3').

7. Guidage de train de roues selon une des revendications 1 à 6, **caractérisé en ce que** l'élément élastique (1, 1') présente une partie intérieure (13) dont la région d'extrémité dirigée vers le plateau de ressort (4, 4') présente un rebord en saillie radiale vers l'extérieur, cependant que la butée (10, 10') pour la course de débattement du ressort hélicoïdal (2, 2') est formée par le plateau de ressort (4, 4') et par le rebord de la butée (10, 10').

8. Guidage de train de roues selon la revendication 7, **caractérisé en ce que** le téton de guidage (3, 3') du ressort hélicoïdal et la partie intérieure de l'élément élastique (1, 1') sont reliés l'un à l'autre solidairement en rotation autour d'un axe (L, L') parallèle à leurs axes médians longitudinaux.

9. Guidage de train de roues selon une des revendications 1 à 8, **caractérisé en ce que** le téton de guidage (3, 3') du ressort hélicoïdal (2, 2') et l'élément élastique (1, 1') en matière élastomère sont boulonnés ensemble.

10. Guidage de train de roues selon une des revendications 1 à 9, **caractérisé en ce que** l'élément élastique (1, 1') en matière élastomère est un ressort caoutchouc-métal.

11. Guidage de train de roues selon une des revendications 1 à 10, **caractérisé en ce que** le ressort hélicoïdal (2, 2') est en acier.

12. Véhicule ferroviaire équipé d'un bogie (200) et de guidages de train de roues attachés à ce bogie, qui présentent chacun au moins deux ressorts hélicoïdaux reliés à un boîtier de palier d'un train de roues, les ressorts hélicoïdaux (2, 2') étant disposés sur des côtés mutuellement opposés d'un palier d'essieu (100) du train de roues, la course de débattement des ressorts hélicoïdaux (2, 2') s'étendant sensiblement normalement au plan de la voie (ε) et, à chaque ressort hélicoïdal (2, 2') est associé au moins un élément élastique (1, 1') en matière élastomère disposé au-dessus ou au-dessous du ressort hélicoïdal, **caractérisé en ce que** l'élément élastique (1) appartenant à un premier ressort hélicoïdal (2) associé au palier d'essieu est disposé au-dessus de ce premier ressort hélicoïdal (2) et l'élément élastique (1') appartenant à un deuxième ressort hélicoïdal (2') disposé sur un côté du palier d'essieu qui est à l'opposé du premier ressort hélicoïdal (2) est disposé sous le deuxième ressort hélicoïdal (2').

13. Véhicule ferroviaire selon la revendication 12, **caractérisé en ce que** les guidages de train de roues sont constitués chacun par un guidage de train de roues selon une des revendications 1 à 11.
